(19)

Europäisches Patentamt
European Patent Office
Office européen des brevets

(11) **EP 1 775 682 A2**

(12) **EUROPEAN PATENT APPLICATION**

(43) Date of publication:
**18.04.2007 Bulletin 2007/16**

(51) Int Cl.:
***G06T 5/00*** (2006.01)

(21) Application number: **06021476.4**

(22) Date of filing: **13.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.10.2005 KR 20050097156**

(71) Applicant: **Samsung Electronics Co., Ltd.**
**Suwon-si, Gyeonggi-Do (KR)**

(72) Inventors:
• **Park, Tae-shu**
**c/oSamsung Adv. Inst. of Technology**
**Yongin-si**
**Gyeonggi-do (KR)**
• **Kim, Yeun-bae**
**c/oSamsung Adv. Inst. of Technology**
**Yongin-si**
**Gyeonggi-do (KR)**

(74) Representative: **Hylarides, Paul Jacques et al**
**Arnold & Siedsma,**
**Sweelinckplein 1**
**2517 GK The Hague (NL)**

(54)   **Apparatus, medium, and method with facial-image-compensation**

(57)   A facial-image-compensating device, medium, and method. The facial-image-compensating device may include a detection unit to detect an eye region in a facial image, an extraction unit to extract feature information of the detected eye region, and a compensation unit compensating the detected eye region according to the extracted feature information.

**FIG. 1**

EP 1 775 682 A2

**Description**

CROSS-REFERENCE TO RELATED APPLICATIONS

This application is based on and claims priority from Korean Patent Application No. 10-2005-0097156, filed on October 14, 2005, the disclosure of which is incorporated herein in its entirety by reference.

BACKGROUND OF THE INVENTION

1. Field of the Invention

An embodiment of the present invention relates to an apparatus, medium, and method that compensates obtained facial-images. More particularly, an embodiment of the present invention relates to a facial-image-compensating apparatus, medium, and method that performs compensation within an eye region of an image.

2. Description of the Related Art

As digital cameras or camera phones have become widely accepted, customers have been found to use the same in new and various entertaining ways, such as setting resultant images as wallpapers of personal computers or sharing the resultant images with others through blogs or websites. As camera capabilities have been combined with cellular phones, customers have frequently and routinely been found to take pictures of their families, friends, and themselves in daily life. Along with such a recent trend with such underlining portraits, buyers of digital cameras or camera phones appear to prefer products that can take a "looking-good" portrait, i.e., a portrait that may be considered a high quality image as well as portraits that result in subjects in the portrait looking more attractive.

In response to such tendency, companies manufacturing image-capturing devices have focused on developing various methods for producing such high quality images.

As an example, Japanese Unexamined Patent No. 2004-104464 discusses a digital camera and an image-compensation method that statistically analyzes luminance signals of image data taken only by a digital camera by storing image data within the digital camera, and automatically compensating the white balance, gradation, and saturation of the stored image data by using an appropriate compensation curve and by categorizing such images. In a similar approach, the camera system PHS7000V, which has been commercialized by Pantech & Curitel Inc., of South Korea, improves the perceived quality of images by adjusting brightness or by removing salt-and-pepper noise by applying a median filter to the images.

Some research has been pursued an increasing of satisfaction of a taken picture by decorating the pictures. For example, Korean Unexamined Patent No. 2004-0108021 discusses a generating of a virtual avatar by combining real facial-images with various accessories and hair styles.

However, such well-known technologies, as described above, are limited to improving the general quality of images by centering on color compensation or by adding decorative elements to the images. Thus, a method of beautifying a subject's face itself has not been yet suggested. According to studies of psychology and physical attractiveness, and the empirical knowledge in the broadcasting and advertisement industry, key features used to indicate facial attractiveness are clear and vivid eyes and a symmetric facial shape, as well as attractive hair styles or soft skins. More specifically, the importance of beautifying a subject's eyes has been empirically recognized for a long time by cartoonists and professional photographers. For example, many cartoonists use a technique of drawing big eyes and adding white dots in the eye when depicting a beautiful woman. The white dots depict a glint, a specular reflection of a light source such as a fluorescent lamp. Photographers also regard vivid glints as an important element for beautification in taking a portrait. They may use a technique called "catch-light," which optically generates big and vivid glints on the eyes by using a flash or a reflector.

Accordingly, inventors of the present invention have found that there is a need for overcoming these conventional drawbacks.

SUMMARY OF THE INVENTION

An aspect of an embodiment of the present invention is to provide a facial-image-compensating apparatus, medium, and method that beautifies a subject by manipulating visual features in the eye region of a facial-image.

Additional aspects and/or advantages of the invention will be set forth in part in the description which follows and, in part, will be apparent from the description, or may be learned by practice of the invention.

To achieve the above the above and/or other aspects and advantages, embodiments of the present invention include an image modifying apparatus, including a extraction unit to extract feature information from a detected eye region of an image, and a compensation unit to modify pixel values of the detected eye region according to the extracted feature information to selectively emphasize portions of the detected eye region.

The apparatus may further include a detection unit to detect the eye region in a facial image.

The feature information may include information about glints in the eye region.

In addition, the extraction unit may determine whether there are glints in the eye region based on luminance values of respective pixels in the eye region.

Further, the compensation unit may modify the eye region by adding synthesized glints and/or by expanding existing glints in the eye region.

Here, the compensation unit may add the synthesized glints to the eye region by editing luminance values of respective pixels at at least one select position in the eye region, according to a reflection model.

Further, when expanding the existing glints of the eye region, the compensation unit may overwrite an expanded segment of the existing glints onto the eye region.

In addition, the compensation unit may include information of at least one of an appropriate number and size of glints of the eye region, according to a size of the eye region.

Still further, the compensation unit may expand a dynamic range in the eye region by decreasing luminance values of respective pixels of dark regions of the eye region, and/or increasing luminance values of respective pixels of light regions of the eye region.

To achieve the above the above and/or other aspects and advantages, embodiments of the present invention include a facial-image compensating method, including extracting feature information of a detected eye region of an image, and modifying pixel values of the detected eye region according to the extracted feature information selectively emphasizing portions of the detected eye region.

The method may further include detecting the eye region in a facial image.

In addition, the extracting may include extracting information about glints in the eye region.

Further, the extracting may include determining whether there are glints on the eye region based on luminance values of respective pixels in a region within the eye region.

The modifying may further include modifying the eye region by adding synthesized glints and/or by expanding existing glints in the eye region.

Here, the modifying may include adding the synthesized glints to the eye region by editing luminance values of respective pixels at at least one select position in the eye region, according to a reflection model.

Further, when expanding the existing glints of the eye region, the modifying may include overwriting an expanded segment of the existing glints onto the eye region.

In addition, the modifying may further include determining information of at least an appropriate number or size of glints in the eye region, according to a size of the eye region.

The modifying may still further include expanding a dynamic range in the eye region by decreasing luminance values of respective pixels of dark regions of the eye region, and/or increasing luminance values of respective pixels of light regions of the eye region.

To achieve the above the above and/or other aspects and advantages, embodiments of the present invention include at least one medium including computer readable code to control at least one processing element to implement an embodiment of the present invention.

BRIEF DESCRIPTION OF THE DRAWINGS

These and/or other aspects and advantages of the invention will become apparent and more readily appreciated from the following description of the embodiments, taken in conjunction with the accompanying drawings of which:

FIG. 1 illustrates a facial-image-compensating device, according to an embodiment of the present invention;

FIG. 2 illustrates a facial-image-compensating method, according to an embodiment of the present invention;

FIG. 3 illustrates a process of detecting a facial area and an eye region, according to an embodiment of the present invention;

FIG. 4 illustrates prominent luminance characteristics of a glint in an eye region, according to an embodiment of the present invention; and

FIG. 5 illustrates a process of synthesizing a glint by changing luminance values in an eye region, according to an embodiment of the present invention.

DETAILED DESCRIPTION OF THE PREFERRED EMBODIMENTS

Reference will now be made in detail to embodiments of the present invention, examples of which are illustrated in the accompanying drawings, wherein like reference numerals refer to the like elements throughout. In addition to the following embodiments, the present invention may also be embodied in many different forms and should not be construed as being limited to embodiments set forth herein. Embodiments are described below to explain the present invention by referring to the figures.

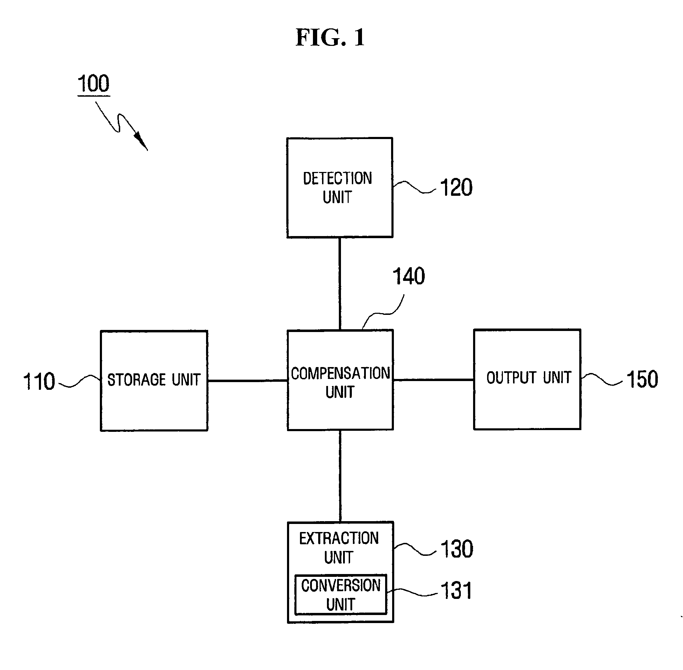

FIG. 1 illustrates a facial-image-compensating device, according to an embodiment of the present invention.

As illustrated, a facial-image-compensating device 100 may include a storage unit 110 to store a captured raw image, a detection unit 120 to detect a facial-image area of the stored image and an eye region from the detected facial-image, an extraction unit 130 to extract visual features of the detected eye region, a compensation unit 140 to compensate the eye region by manipulating visual features of the eye region according to the extracted feature information, and an output unit 150 to display, save, or transmit the compensated facial-image, for example.

As only an example, the storage unit 110 may be a memory embedded in a photographing device, such as a digital camera or a mobile communication device with a built-in camera, so as to save captured images or the storage unit 110 may be a removable memory card of such photographing device, noting that alternative embodiments are equally available. An image stored in the storage unit 110 may include only a facial-image or a facial-image and a background image, for example. Below, in an embodiment of the present invention, the case where the image stored in the storage unit 110 includes the facial-image and the background image will be further described.

Also, the storage unit 110, according to an embodiment of the present invention, may be an image buffer of CMOS/CCD camera, RAM, or a flash memory, again noting that embodiments of present invention are not limited to the same.

Accordingly, the detection unit 120 may detect an eye region, e.g., from the image stored in the storage unit 110, such as by detecting an eye region while minimizing the search space by detecting and locating eye regions after detecting the facial region, e.g., by using skin colors and other features. This is just one example, as various methods for detecting and locating eyes have been suggested in the academic world of computer vision.

As only an example, the detection unit 120 may be easily implemented by using well-known off-the-shelf products such as Library Mobile-I of Neven Vision Co., Ltd., Face Sensing Engine from Oki Electrics, Japan, or OKAO of OMRON Co., Ltd., Japan. Here, the detection unit 120 may usually determine the location of the center point and border points of the eye region.

The extraction unit 130 may extract feature information from pixel values making up images of an eye region, e.g., as detected by the detection unit 120, and as implemented in an embodiment of the present invention, glints may be extracted as feature information, as an example.

Here, the visual feature information may be any kind of information which is desirable for synthesizing and enlarging a glint so the resultant glint appears as natural as possible. Visual features can include the location, size, and/or brightness of existing glints in the eye regions and characteristics of the illumination used when the picture was taken. For example, the extraction unit 130 may analyze glints by finding peaks in the luminance channel such as the Y luminance in the YUV format, and may segment the found glints.

Here, the extraction unit 130 may include a color space conversion unit 131, for example, for simplifying algorithms and calculations in detecting and manipulating glints in the compensation unit 140. For example, it is easy to manipulate pixels making up glints in YUV or HSV colorspaces, rather than in the RGB color space, because the YUV and HSV colorspaces, from the nature of their format treat luminance separated from chrominance, as an independent band, and because glints are identifiable by a prominent colorspace change which mainly occur in the luminance band. Assuming white/light illumination, the number of operations needed for glint manipulation can be reduced by working in such color spaces.

Color conversion between such colorspaces has been standardized. For example, when an RGB value is given, the YUV value can be acquired using the below Equation 1, and when a YUV value is given, the RGB value can be acquired by an inverse of Equation 1. Here, coefficients of Equation 1 follow common conversion equations, but can be changed according to features and applied fields of image devices.

Equation 1:

$$Y = 0.299R + 0.587G + 0.114B$$

$$U = -0.147R - 0.289G + 0.436B$$

$$V = 0.615R - 0.515G - 0.100B$$

If RGB values of an eye region is converted into YUV values, the extraction unit 130 can determine whether a glint exists in the eye region just by checking the Y band in YUV, for example, instead of checking 3 different color bands in RGB space because the glint, an area generated by a reflection of a light source on the surface of the eye, has a luminance much higher than other regions of the eye. Similarly, the compensation unit 140 may manipulate the brightness of glints and eye regions while preserving their colors. Of course, such detection and manipulation are also available in the RGB space.

If the extraction unit 130 determines that there are glints in the eye region, the compensation unit 140 may add new glints, e.g., based on the size of currently-existing glints, or expand the size of the existing glints, for example. If no glint is detected in the eye region, new glint(s) of appropriate size can be added to appropriate location(s), e.g., which may be predefined according to the size of the detected eye region. Here, the compensation unit 140 may record the compensated facial image in the storage unit 110 again or output the image through the output unit 150, noting that alternative embodiments are equally available.

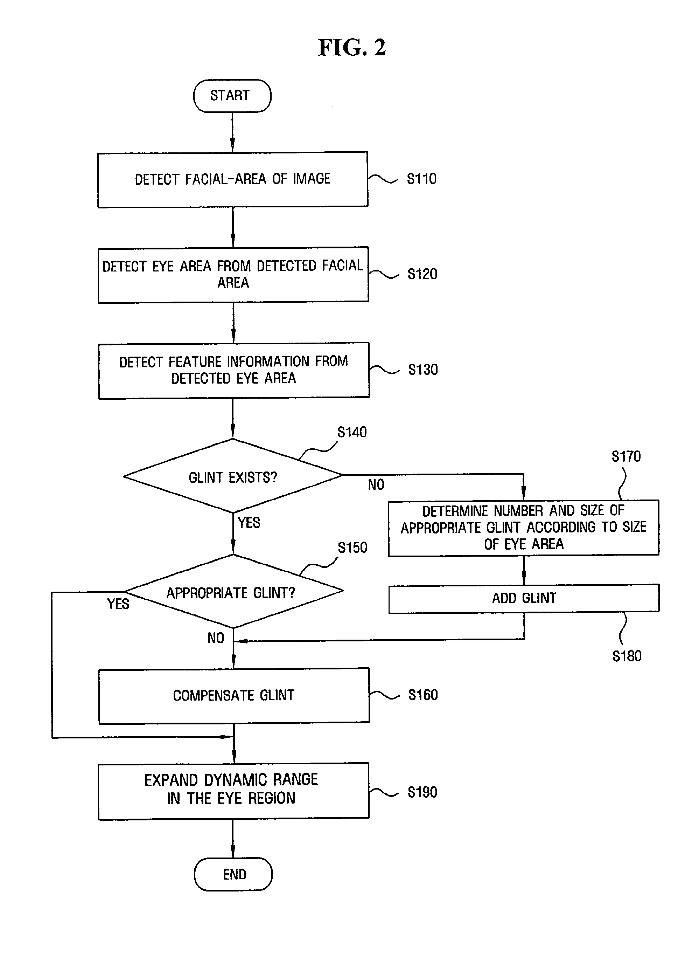

FIG. 2 illustrates a facial-image-compensating method, according to an embodiment of the present invention. Here, in this embodiment, we have assumed that the facial image, which contains a face, has already been captured and stored in an imaging device, such as a digital camera, noting that alternative embodiments are equally available.

As illustrated, a facial area is detected in operation S110, e.g., from an image stored in the storage unit 110.

An eye region of the facial area may, thus, be detected in operation S120. Here, the eye region also can be detected in a similar way as the method for detecting the facial area, for example, such as in the following.

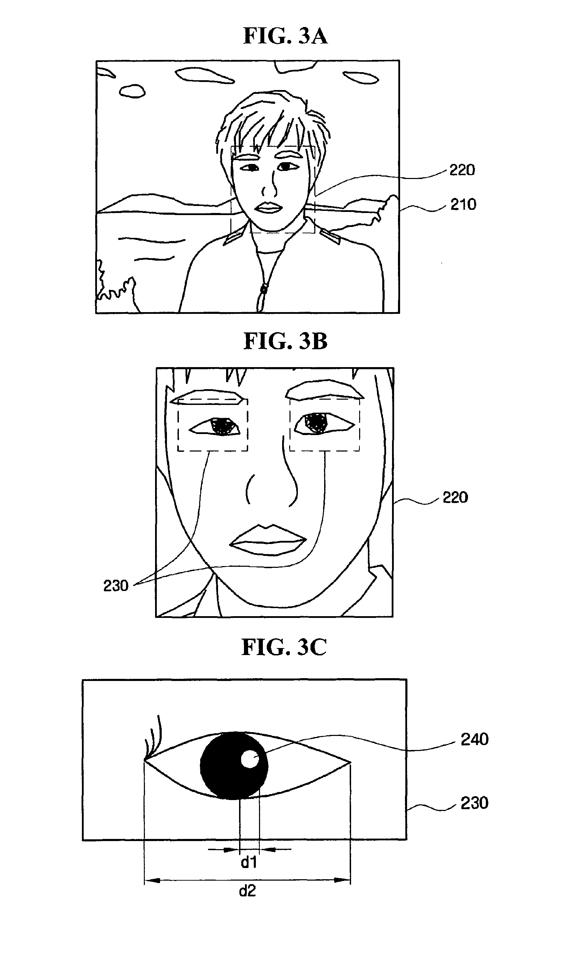

As illustrated in FIG. 3A, a facial area 220 may be detected from the image 210, e.g., stored in the storage unit 110, through an above mentioned facial area detection method. According to an embodiment, the detected facial area 220 is further illustrated in FIG. 3B, and an eye region 230 may further be detected from the facial area 220, e.g., detected through the above-mentioned detection method. Here, location and size of the detected eye region 230 may be saved, e.g., by the detection unit 120. According to one embodiment, because the compensation unit 140 can save information about the number and the size of glints appropriate to any given size of an eye region as a factory setting or through an upgrade, for example, if a glint does not exist in the detected eye region, the number and the size of appropriate glints, and others can be determined and added.

Then, feature information about the eye region, e.g., as detected by the detection unit 120, may be extracted in operation S130.

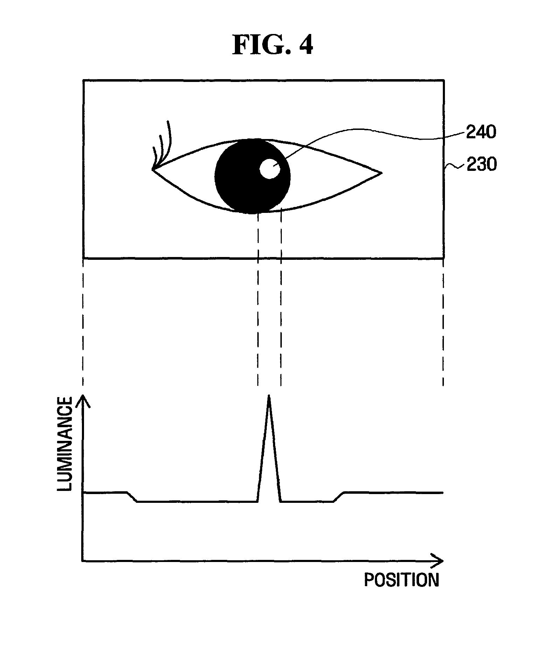

Specifically, it may be determined whether glints exist on the eye region, e.g., through the converted YUV value, e.g., by extraction unit 130. Specifically, if the conversion unit 131, for example, converts a pixel value of the eye region 230 from the RGB value into the YUV value through color space conversion, the luminance signal may be easily handled. As illustrated in FIG. 4, it can be seen that the corresponding luminance becomes very high at the position of glints in the eye region 230. Therefore, according to an embodiment, the extraction unit 130 may determine whether there are glints, the number and the size of glints, only as an example. Here, the reference to size means a diameter of a glint, for example, as depicted by d1 in FIG. 3C, noting that alternative embodiments are equally available.

Features of a glint and techniques for locating the same in an image have previously been established through various research, such as "Improved Video-based Eye-gaze Detection Method" Ebisawa et al, IEEE Tr. Instrumentation and Measurement, Vol. 47, No. 4, Aug. 1998.

In one embodiment of the present embodiment, and solely as an example, a potential operation of compensation unit 140 will be further explained by using a case information about the size and the number of glints appropriate for the eye size (d2 in FIG. 3C) may be stored in advance.

As a result of the determination, if glints are detected in operation S140, it may be determined whether the number and the size of glints existing in the eye region are appropriate, in operation in S150. Here, in one embodiment, because information on the size d2 of appropriate glints has previously been stored, according to the size d1 of the detected eye region 230, it can be determined whether the number and the size of the detected glints are appropriate, e.g., by compensation unit 140. Here, if it is determined that the number and the size of the glints are not appropriate, a new glint or existing glints may be expanded in operation S160, e.g., by the compensation unit 140.

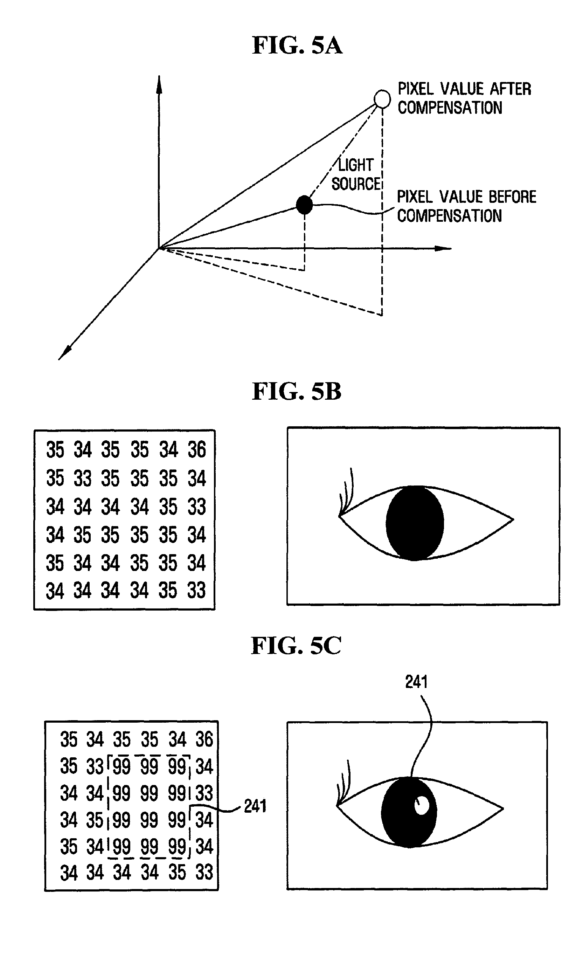

As only an example, a common shading algorithm may be used to generate a new glint. Basically, a pixel for a glint may be described as a sum of a pixel vector of a surface point and an illumination vector in a color space, as is described in FIG. 5A. For example, if a predetermined position has {35, 40, 45} as the RGB values and light reaching the position has {50, 50, 50} as the RGB values, when excluding diffused reflection and other elements, the point of glint may be expected to have an RGB value of {85, 90, 95}. Similarly, if a simple model is used based on a pure white light source, a glint may be made up by adding the luminance value of the light source to the Y value among predetermined YUV pixel values. As simply illustrated in FIG. 5B and 5C, a new glint can thus be easily added by adding illumination vales to the surface pixel values in the luminance band, noting that alternatives are equally available. Here, by working in the luminance band, this operation minimizes deterioration of chromatic characteristics in the eye region.

However, because an eye ball is spherical and reflects lights proportional to the angle of reflection, the specular reflection and the diffused reflection may be calculated together, after passing through the modeling of the surface of the eye and the lighting for synthesizing a natural glint, for example. In one embodiment, the method may be simplified by omitting the calculation of diffused reflection and setting the lighting model in advance in consideration of the number of operations of the device implementing the algorithm. As only an example, Phong model (Bui-Tuong Phong, "Illumination for computer generated images", Comm. ACM 18, 6(June 1975) 311-317.) suggests an empirical model for synthesizing natural specular reflection with small amount of calculation.

According to an embodiment, the expansion of the existing glints is relatively easy; it may be executed by segmenting pixels in the region determined as glints, expanding the segmented pixels by using a common image processing technique, and then overwriting the expanded pixels in the original position. Even though there may already be an existing glint, a more natural effect can be expected by adding new glints so as to have at least two glints, for example.

In an embodiment, if the compensation unit 140 determines that there is no glint in the eye region, the size d2 and the number of appropriate glints 240, according to the size d1 of the detected eye region 230, may be determined in operation S170, as illustrated in FIG. 3. Moreover, glints may be added in operation S180, according to the size and the number of determined glints 240, for example.

Then, according to a size and number of determined glints, addition and compensation of glints may be executed in the eye region, as in operation S180.

Thus, optionally, a physical attractiveness can be increased by expanding a dynamic range in an eye region. Such increase in attractiveness can be achieved by decreasing luminance of dark regions such as pupils or irises, and/or by increasing luminance of white/light regions in eye regions, in operation S190. Combined with the glint manipulation, this operation makes eyes more vivid by increasing brightness contrast.

As such, a facial-image-compensating device, medium, and method, according to an embodiment of the present invention, may generate a facial image that can cognitively satisfy a user, by compensating the eye region, which is an important part of increasing facial attractiveness.

In addition to the above described embodiments, embodiments of the present invention can also be implemented through computer readable code/instructions in/on a medium, e.g., a computer readable medium, to control at least one processing element to implement any above described embodiment. The medium can correspond to any medium/media permitting the storing and/or transmission of the computer readable code.

The computer readable code can be recorded/transferred on a medium in a variety of ways, with examples of the medium including magnetic storage media (e.g., ROM, floppy disks, hard disks, etc.), optical recording media (e.g., CD-ROMs, or DVDs), and storage/transmission media such as carrier waves, as well as through the Internet, for example. Here, the medium may further be a signal, such as a resultant signal or bitstream, according to embodiments of the present invention. The media may also be a distributed network, so that the computer readable code is stored/transferred and executed in a distributed fashion. Still further, as only an example, the processing element could include a processor or a computer processor, and processing elements may be distributed and/or included in a single device.

In addition, in the facial-image-compensating device, medium, and method, according to an embodiment of the present invention, potential terms "unit", as used in any embodiment may refer to a hardware element such as a FPGA or an ASIC, with the "unit" performing certain roles. Similarly, "unit" could equally be implemented in addressing-possible storage media, or could be implemented in one or more processors. For example, "unit" may include software elements, object-oriented software elements, class elements, task elements, processes, functions, attributes, procedures, circuits, data, database, data structures, tables, arrays, and variables, for example. Still further, elements and operations provided in/by such "units" may be combined into fewer elements or "units", or may be further divided into additional elements and 'units'. Here, though such particular embodiments have been described, embodiments of the present invention should not be limited to the same.

Thus, according to a facial-image-compensating device, medium, and method, according to an embodiment of the present invention, a subject in an image may be naturally beautified by strengthening important visual features, key features for determining physical attractiveness, while the manipulation itself remains unrecogniable, contrary to existing traditional image enhancement approachs such as shot-gun noise removal or color tone tuning.

Above, embodiments of the present invention have be described in detail with reference to the accompanying drawings of block diagrams and flow charts to explain a facial-image-compensating device, medium, and method. Each block and combinations of blocks of the flow charts can be implemented according to computer readable code, for example.

Still further, each illustrated block can represent at least part of a module, or a segment of code that includes one or more executable instructions for executing specific logical operations. It should be further noted that such operations mentioned in the blocks can be executed in a different order. For example, two sequential blocks can be executed at the same time, and/or blocks can be executed in an alternate order.

Although a few embodiments of the present invention have been shown and described, it would be appreciated by those skilled in the art that changes may be made in these embodiments without departing from the principles and spirit of the invention, the scope of which is defined in the claims and their equivalents.

**Claims**

1. An image modifying apparatus, comprising:

   a extraction unit to extract feature information from a detected eye region of an image; and
   a compensation unit to modify pixel values of the detected eye region according to the extracted feature information to selectively emphasize portions of the detected eye region.

2. The apparatus of claim 1, further comprising a detection unit to detect the eye region in a facial image.

3. The apparatus of claim 1, wherein the feature information includes information about glints in the eye region.

4. The apparatus of claim 1, wherein the extraction unit determines whether there are glints in the eye region based on luminance values of respective pixels in the eye region.

5. The apparatus of claim 1, wherein the compensation unit modifies the eye region by adding synthesized glints and/or by expanding existing glints in the eye region.

6. The apparatus of claim 5, wherein the compensation unit adds the synthesized glints to the eye region by editing luminance values of respective pixels at at least one select position in the eye region, according to a reflection model.

7. The apparatus of claim 5, wherein, when expanding the existing glints of the eye region, the compensation unit overwrites an expanded segment of the existing glints onto the eye region.

8. The apparatus of claim 1, wherein the compensation unit includes information of at least one of an appropriate number and size of glints of the eye region, according to a size of the eye region.

9. The apparatus of claim 1, wherein the compensation unit expands a dynamic range in the eye region by decreasing luminance values of respective pixels of dark regions of the eye region, and/or increasing luminance values of respective pixels of light regions of the eye region.

10. A facial-image compensating method, comprising:

    extracting feature information of a detected eye region of an image; and
    modifying pixel values of the detected eye region according to the extracted feature information selectively emphasizing portions of the detected eye region.

11. The method of claim 10, further comprising detecting the eye region in a facial image.

12. The method of claim 10, wherein the extracting includes extracting information about glints in the eye region.

13. The method of claim 10, wherein the extracting includes determining whether there are glints on the eye region based on luminance values of respective pixels in a region within the eye region.

14. The method of claim 10, wherein the modifying includes modifying the eye region by adding synthesized glints and/or by expanding existing glints in the eye region.

15. The method of claim 14, wherein the modifying includes adding the synthesized glints to the eye region by editing luminance values of respective pixels at at least one select position in the eye region, according to a reflection model.

**16.** The method of claim 14, wherein, when expanding the existing glints of the eye region, the modifying includes overwriting an expanded segment of the existing glints onto the eye region.

**17.** The method of claim 10, wherein the modifying includes determining information of at least an appropriate number or size of glints in the eye region, according to a size of the eye region.

**18.** The method of claim 10, wherein the modifying includes expanding a dynamic range in the eye region by decreasing luminance values of respective pixels of dark regions of the eye region, and/or increasing luminance values of respective pixels of light regions of the eye region.

**19.** At least one medium comprising computer readable code to control at least one processing element to implement the method of claim 10.

# FIG. 1

# FIG. 2

START

DETECT FACIAL-AREA OF IMAGE — S110

DETECT EYE AREA FROM DETECTED FACIAL AREA — S120

DETECT FEATURE INFORMATION FROM DETECTED EYE AREA — S130

GLINT EXISTS? — S140

NO

DETERMINE NUMBER AND SIZE OF APPROPRIATE GLINT ACCORDING TO SIZE OF EYE AREA — S170

YES

APPROPRIATE GLINT? — S150

ADD GLINT — S180

YES

NO

COMPENSATE GLINT — S160

EXPAND DYNAMIC RANGE IN THE EYE REGION — S190

END

## FIG. 3A

220
210

## FIG. 3B

220

230

## FIG. 3C

240

230

d1

d2

# FIG. 4

## FIG. 5A

PIXEL VALUE AFTER
COMPENSATION

LIGHT
SOURCE

PIXEL VALUE BEFORE
COMPENSATION

## FIG. 5B

```
35  34  35  35  34  36
35  33  35  35  35  34
34  34  34  34  35  33
34  35  35  35  35  34
35  34  34  35  35  34
34  34  34  34  35  33
```

## FIG. 5C

```
35  34  35  35  34  36
35  33  99  99  99  34
34  34  99  99  99  33
34  35  99  99  99  34
35  34  99  99  99  34
34  34  34  34  35  33
```

241

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020050097156
- JP 2004104464 A
- KR 20040108021

### Non-patent literature cited in the description

- **EBISAWA et al.** Improved Video-based Eye-gaze Detection Method. *IEEE Tr. Instrumentation and Measurement,* August 1998, vol. 47 (4
- **BUI-TUONG PHONG.** Illumination for computer generated images. *Comm. ACM 18,* June 1975, vol. 6, 311-317